(19) **Europäisches Patentamt / European Patent Office / Office européen des brevets**

(11) **EP 4 760 817 A1**

(12) **EUROPEAN PATENT APPLICATION**

(43) Date of publication:
**17.06.2026 Bulletin 2026/25**

(21) Application number: **25211569.6**

(22) Date of filing: **28.10.2025**

(51) International Patent Classification (IPC):
*H01M 4/58* (2010.01)  *H01M 4/136* (2010.01)
*C01B 25/00* (2006.01)  *H01M 4/1397* (2010.01)
*H01M 4/36* (2006.01)  *H01M 4/62* (2006.01)

(52) Cooperative Patent Classification (CPC):
**H01M 4/366; C01B 25/45; H01M 4/136;
H01M 4/1397; H01M 4/5825; H01M 4/625;**
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 JP 2024219683**

(71) Applicant: **TOYOTA JIDOSHA KABUSHIKI
KAISHA**
**Toyota-shi, Aichi-ken 471-8571 (JP)**

(72) Inventor: **MAHARA, Takanori
Toyota-shi, 471-8571 (JP)**

(74) Representative: **Kuhnen & Wacker
Patent- und Rechtsanwaltsbüro PartG mbB
Prinz-Ludwig-Straße 40 A
85354 Freising (DE)**

(54) **POSITIVE ELECTRODE ACTIVE MATERIAL, BATTERY, AND METHOD FOR PRODUCING POSITIVE ELECTRODE ACTIVE MATERIAL**

(57) A positive electrode active material includes a primary particle (1) and a coating (5), wherein the primary particle (1) includes an olivine-type phosphate compound, the coating (5) covers at least part of a surface of the primary particle (1), the coating (5) includes carbon, and when a filtrate is obtained by a preparation method including immersing 0.5 g of the positive electrode active material in 10 g of pure water and subjecting a resulting immersed liquid to ultrasonic treatment for 10 minutes and stirring for 6 hours followed by filtration, a concentration of a transition metal element in the filtrate detected by ICP-AES is 200 ppm or less in total.

## FIG. 1

EP 4 760 817 A1

**Description**

BACKGROUND OF THE INVENTION

1. Field of the Invention

The present disclosure relates to a positive electrode active material, a battery, and a method for producing a positive electrode active material.

2. Description of Related Art

Japanese Unexamined Patent Application Publication No. 2021-9838 (JP 2021-9838 A) discloses a positive electrode active material including lithium manganese iron phosphate (hereinafter, which may be abbreviated as "LMFP") particles having a carbon coat layer provided on the surface thereof.

SUMMARY OF THE INVENTION

In order to improve battery characteristics, olivine-type phosphate compounds such as LMFP, lithium manganese phosphate (LMP), and lithium iron phosphate (LFP) been developed. In a liquid-based battery, a trace amount of moisture contained therein may react with a fluoride such as $LiPF_6$ contained in an electrolytic solution to form hydrogen fluoride (HF). Therefore, there is a fear that contact between an olivine-type phosphate compound and HF breaks the crystal structure of the olivine-type phosphate compound such that the capacity retention ratio deteriorates.

As described in JP 2021-9838 A, the capacity retention ratio is expected to be improved by covering the olivine-type phosphate compound with a carbon coat layer. However, there is room for improvement in the capacity retention ratio of the battery.

The present disclosure provides a positive electrode active material, a battery, and a method for producing a positive electrode active material, for improving the capacity retention ratio.

Hereinbelow, the technical configurations and functions and effects of the present disclosure will be described. It should be noted that action mechanisms of the present disclosure include presumptions. The action mechanisms do not limit the technical scope of the present disclosure.

A first aspect of the present disclosure relates to a positive electrode active material including a primary particle and a coating. The primary particle includes an olivine-type phosphate compound. The coating covers at least part of a surface of the primary particle. The coating includes carbon. When a filtrate is obtained by a preparation method including immersing 0.5 g of the positive electrode active material in 10 g of pure water and subjecting a resulting immersed liquid to ultrasonic treatment for 10 minutes and stirring for 6 hours followed by filtration, a concentration of a transition metal element in the filtrate detected by ICP-AES is 200 ppm or less in total.

The present inventors have found that the concentration of a transition metal element in the filtrate can be an indicator for estimating the degree of deterioration of the capacity retention ratio. When the concentration of a transition metal element in the filtrate is 200 ppm or less in total, it is expected that deterioration of the capacity retention ratio of a battery can be prevented.

In the positive electrode active material according to the first aspect of the present disclosure, a Gardner color scale of the filtrate may be 6 or less.

The present inventors have found that the Gardner color scale of the filtrate can be an indicator for estimating the degree of deterioration of the capacity retention ratio. When a Gardner color scale of the filtrate is 6 or less, it is expected that deterioration of the capacity retention ratio of a battery can be prevented.

In the positive electrode active material according to the first aspect of the present disclosure, when the positive electrode active material is heated from a temperature of 25°C to a temperature of 300°C at 1°C/min and then left to stand at 300°C for 1 hour, a mass change ratio of the positive electrode active material may be 0.20% or less.

The present inventors have found that the mass change ratio of the positive electrode active material can be an indicator for estimating the degree of deterioration of the capacity retention ratio. When the mass change ratio is 0.20% or less, it is expected that deterioration of the capacity retention ratio of a battery can be prevented.

The positive electrode active material according to the first aspect of the present disclosure may further include a plurality of the primary particles, and a secondary particle, the secondary particle being an assembly of the plurality of the primary particles.

In the positive electrode active material according to the first aspect of the present disclosure, the olivine-type phosphate compound may include at least one selected from the group consisting of lithium manganese iron phosphate, lithium manganese phosphate, and lithium iron phosphate.

In the positive electrode active material according to the first aspect of the present disclosure, the olivine-type phosphate compound may be lithium manganese iron phosphate, and the transition metal element may include at least one selected from the group consisting of manganese and iron.

In the positive electrode active material according to the first aspect of the present disclosure, the filtrate may include the transition metal element, and the transition metal element may include the olivine-type phosphate compound and at least one selected from the group consisting of manganese and iron.

In the positive electrode active material according to the first aspect of the present disclosure, the Gardner color scale of the filtrate may be 1 or more.

In the positive electrode active material according to the first aspect of the present disclosure, the Gardner color scale of the filtrate may be 5 or less.

A second aspect of the present disclosure relates to a battery including the positive electrode active material according to the first aspect.

The battery according to the second aspect of the present disclosure may include a bipolar structure.

A third aspect of the present disclosure relates to a method for producing a positive electrode active material. The method may include providing precursor particles and subjecting the precursor particles to vacuum drying treatment at a temperature of 150°C or higher to produce the positive electrode active material. The positive electrode active material may be the positive electrode active material according to the first aspect.

In the method according to the third aspect of the present disclosure, the vacuum drying treatment may be performed at a temperature of 180°C or higher and 250°C or lower.

The method according to the third aspect of the present disclosure may further include, before performing the vacuum drying treatment, impregnating and mixing the precursor particles with toluene.

Hereinbelow, an embodiment of the present disclosure (which hereinafter may be abbreviated as "present embodiment") and an example of the present disclosure (which hereinafter may be abbreviated as "present example") will be described. It should be noted that the present embodiment and the present example do not limit the technical scope of the present disclosure. The present embodiment and the present example are illustrative in all aspects. The present embodiment and the present example are non-restrictive. The technical scope of the present disclosure includes all modifications within the meaning and the scope that are equivalent to the claims. For example, it is originally expected that certain configurations of the present embodiment may freely be combined.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram of a secondary particle according to the present embodiment;
FIG. 2 is a schematic flowchart of a method for producing a positive electrode active material according to the present embodiment;
FIG. 3 is a schematic perspective view of a battery according to a present embodiment;
FIG. 4 is a schematic cross-sectional view taken along the line IV- IV in FIG. 3; and
FIG. 5 is a table showing the experimental results of Examples No. 1 to No. 3.

DETAILED DESCRIPTION OF EMBODIMENTS

Terms and Phrases

The terms "comprise", "contain", "have" and variations thereof are open-ended terms. When a configuration is described using such an open-ended term, an optional element may or may not be further included in addition to an essential element. The term "consist of" is a closed term. However, even when a configuration is described using such a closed term, impurities present under normal conditions and an additional element irrelevant to the target technique may be included. The term "essentially consist of" is a semi-closed term. When a configuration is described using such a semi-closed term, addition of an element that does not substantially affect the basic and novel characteristics of the target technique is allowed.

Terms such as "may" and "can" are used not in a mandatory sense, meaning "must" but in a permissive sense, meaning "it is possible".

Unless otherwise specified, the order of execution of multiple steps, actions, operations, and the like included in any of various methods is not limited to the described order. For example, multiple steps may proceed simultaneously. For example, multiple steps may be executed one after another.

Terms such as "first" and "second" are used only to distinguish a plurality of elements from each other. The terms are not intended to limit the elements. The terms are not linked to, for example, the order or importance of the elements.

For example, the phrase "at least one of A and B" includes "A or B" and "A and B". "At least one of A and B" may also be written as "A and/or B".

A geometric term should not be interpreted in a strict sense. Examples of the geometric term include "parallel", "vertical", and "orthogonal". For example, direction, angle, or distance, may relatively be displaced to the extent that substantially the same or similar function can be obtained. The geometric term may include, for example, tolerances or errors in terms of design, operation, and production. A dimensional relationship in each of the drawings may not coincide with an actual dimensional relationship. The dimensional relationship in each of the drawings may have been changed to lead readers to understand. For example, length, width, and thickness may have been changed. Part of the configuration may have been omitted.

Unless otherwise specified, an element described in a "singular form" may be plural. For example, a particle may refer to a plurality of particles, assemblies of particles, or powder particles.

Unless otherwise specified, a numerical range such as "m% to n%" includes an upper limit and a lower limit. That is, "m% to n%" indicates a numerical range of "equal to or more than m% and equal to or less than n%". Further, "equal to or more than m% and equal to or less than n%" includes "more than m% and less than n%". "Equal to or more than" and "equal to or less than" are expressed by inequality signs having an equal sign "$\leq$" and "$\geq$", respectively. "More than" and "less than" are expressed by inequality signs not having an equal sign "<" and ">", respectively. Any numerical value selected from the numerical range may be set as a new upper or lower limit. For example, a new numerical range may be set by freely combining a numerical value in the numerical range and a numerical value described in a different part herein or shown in tables or the drawings.

All the numerical values are interpreted as being modified by the term "about". The term "about" may mean, for example, $\pm 5\%$, $\pm 3\%$, or $\pm 1\%$. All the numerical values may be approximate values that may vary depending on how the target technique is used. All the numerical values may be expressed in significant figures. Unless otherwise specified, a measured value may be an average of two or more measurements. The number of measurements may be 3 or more, 5 or more, or 10 or more. It is generally expected that the larger the number of measurements, the higher the reliability of the average. A measured value may be rounded off based on the number of significant figures. A measured value may include, for example, an error due to the detection limit of a measurement device.

Devices, software, etc. used for measurement of various values are merely examples. Products similar to the devices etc. exemplified herein may be used. When a similar product is used, measurement conditions may be adjusted depending on a device to be used.

The chemical composition of a compound can be measured by ICP-AES (Inductively Coupled Plasma Atomic Emission Spectroscopy). A sample solution is prepared by dissolving 0.1 g of a sample (e.g., a positive electrode active material) in a mixed acid (10 mL) of hydrochloric acid and sulfuric acid. The sample solution is diluted to an appropriate concentration in a measuring flask. After dilution, chemical composition analysis is performed by an ICP-AES device. For example, a device sold under the trade name of "PS3520 UVDDII (manufactured by Hitachi High-Tech Science Corporation)" may be used.

"D50" refers to a particle diameter corresponding to 50% of a cumulative amount in a volume-based particle size distribution (cumulative size distribution). The D50 (except D50 of primary particles) is measured by, for example, a laser diffraction particle size distribution measurement device.

The "maximum Feret diameter" refers to the length of long side of a bounding rectangle (rectangle or square) of a particle. When the bounding rectangle is a square, the length of its long side refers to the length of its each side.

A stoichiometric composition formula represents a typical example of a compound. A compound may have a non-stoichiometric composition. For example, "$Al_2O_3$" is not limited to a compound having an amount-of-substance ratio (mole ratio) of "Al/O = 2/3". Unless otherwise specified, "$Al_2O_3$" represents a compound containing Al and O in any amount-of-substance ratio. For example, the compound may be doped with a trace element. Some of Al and O may be replaced with another element.

A "derivative" refers to a compound obtained by modifying part of its original compound by at least one selected from the group consisting of functional group introduction, atomic substitution, oxidation, reduction, and another chemical reaction. The number of modification sites may be one or more. A "substituent" may include, for example, at least one selected from the group consisting of an alkyl group, an alkenyl group, an alkynyl group, a cycloalkyl group, an unsaturated cycloalkyl group, an aromatic group, a heterocyclic group, a halogen atom (e.g., F, Cl, Br, or I), an OH group, an SH group, a CN group, an SCN group, an OCN group, a nitro group, an alkoxy group, an unsaturated alkoxy group, an amino group, an alkylamino group, a dialkylamino group, an aryloxy group, an acyl group, an alkoxycarbonyl group, an acyloxy group, an aryloxycarbonyl group, an acylamino group, an alkoxycarbonylamino group, an aryloxycarbonylamino group, a sulfonylamino group, a sulfamoyl group, a carbamoyl group, an alkylthio group, an arylthiol group, a sulfonyl group, a sulfinyl group, a ureido group, an amide phosphate group, a sulfo group, a carboxyl group, a hydroxamic group, a sulfino group, a hydrazino group, an imino group, and a silyl group. These substituents may further be substituted. When there are two or more substituents, these substituents may be the same or different from each other. A plurality of substituents may be bonded to each other to form a ring.

Positive Electrode Active Material

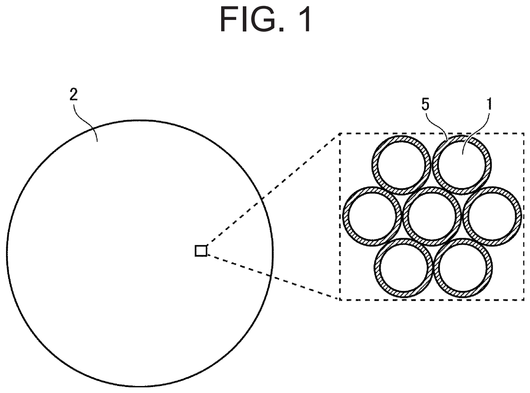

FIG. 1 is a schematic diagram of a secondary particle according to the present embodiment. A positive electrode active material includes primary particle 1 and a coating 5. The positive electrode active material may include a plurality of the primary particles 1. The "primary particle 1" is the smallest unit of a particle. The primary particles 1 may be present independently from each other without aggregating. The primary particles 1 that are present independently from each other are also referred to as single particles. The primary particles 1 may form a secondary particle 2. The positive electrode active material may be, for example, a powder including secondary particles 2. The D50 of the positive electrode active material may be, for example, 5 μm or more, 10 μm or more, 15 μm or more, or 20 μm or more. The D50 of the positive electrode active material may be, for example, 30 μm or less, 25 μm or less, 20 μm or less, 15 μm or less, or 10 μm or less.

The secondary particle 2 is an assembly of the plurality of the primary particles 1. The secondary particle 2 may have any shape. For example, the secondary particle 2 may be spherical, rod-like, or angular. When the secondary particle 2 is spherical, for example, fillability is expected to improve. The sphericity of the secondary particle 2 may be, for example, 0.85 or more, 0.90 or more, or 0.95 or more. The sphericity of the secondary particle 2 may be, for example, 1 or less, 0.95, or 0.90 or less. The "sphericity" refers to the degree of circularity in a scanning electron microscope (SEM) image (two-dimensional image). The sphericity (degree of circularity) is determined by the following formula.

$$\psi = 4\pi S/L^2$$

$\psi$: Sphericity (Degree of circularity)
$\pi$: Circle ratio
S: Sectional area of secondary particle 2 (Area of region surrounded by outline of secondary particle 2)
L: Perimeter of secondary particle 2 (Length of outline of secondary particle 2)

The sphericity is an arithmetic average of 30 secondary particles 2.

The primary particle 1 may have any shape. The primary particle 1 may be, for example, spherical, rod-like, or angular. The maximum Feret diameter of the primary particle 1 may be, for example, 10 nm to 90 nm. The maximum Feret diameter of the primary particle 1 may be, for example, 20 nm or more, 30 nm or more, 40 nm or more, 50 nm or more, 60 nm or more, 70 nm or more, or 80 nm or more. The maximum Feret diameter of the primary particle 1 may be, for example, 80 nm or less or 60 nm or less. The maximum Feret diameter of the primary particle 1 is an arithmetic average of 30 primary particles 1.

The coating 5 contains carbon. The bonding state of a carbon element in the coating 5 is not limited. The coating 5 covers at least part of the surface of the primary particle 1. The coating 5 may cover the entire surface of the primary particle 1.

The thickness of the coating 5 may be, for example, 1 nm or more, 2 nm or more, 3 nm or more, 4 nm or more, or 5 nm or more. The thickness of the coating 5 may be, for example, 10 nm or less, 9 nm or less, 8 nm or less, 7 nm or less, 6 nm or less, or 5 nm or less.

The mass fraction of the coating 5 may be 0.1% or more, 0.5% or more, 1% or more, 2% or more, 3% or more, or 4% or more relative to the mass of the positive electrode active material (olivine-type phosphate compound). The mass fraction of the coating 5 may be 5% or less, 4% or less, or 3% or less relative to the mass of the positive electrode active material.

The primary particle 1 contains an olivine-type phosphate compound. The "olivine-type" refers to a crystal structure belonging to a space group Pnma. A space group is identified by powder X-ray diffraction (XRD) measurement. The primary particle 1 may be one formed of, for example, a single-phase compound. The primary particle 1 may further include a phase belonging to another space group as long as it includes an olivine-type crystal phase. For example, the primary particle 1 may further include an amorphous phase.

When a filtrate is obtained by a preparation method including immersing 0.5 g of the positive electrode active material in 10 g of pure water and subjecting a resulting immersed liquid to ultrasonic treatment for 10 minutes and stirring for 6 hours followed by filtration, the concentration of a transition metal element in the filtrate may be 200 ppm or less, 150 ppm or less, 100 ppm or less, or 80 ppm or less in total. The concentration of a transition metal element in the filtrate may be 1 ppm or more, 5 ppm or more, or 10 ppm or more in total.

The filtrate can be prepared at, for example, room temperature. For example, the filtrate can be prepared at a temperature in the range of 20°C to 25°C. An ultrasonic wave used for the ultrasonic treatment is not limited, and the frequency thereof can be selected from the range of, for example, 30 kHz to 2000 kHz or 40 kHz to 1000 kHz. The stirring can be performed using a shaking machine. A shaking speed can be selected from the range of, for example, 20 r/min to 200 r/min. A shaking method is not limited, and, for example, reciprocal shaking or rotary shaking can appropriately be selected. The filtration can be performed using a membrane filter having a pore diameter that prevents the passage of the positive electrode active material. For example, a membrane filter can be used which has a pore diameter that prevents the passage of all the positive electrode active material, or prevents the passage of the positive electrode active material having a particle diameter of D10 or more, or prevents the passage of the positive electrode active material having a particle diameter of D20 or more. The pore diameter of the membrane filter to be used may be, for example, 0.1 $\mu$m, 0.2 $\mu$m, or 0.3 $\mu$m.

The concentration of the transition metal element contained in the filtrate can be measured by ICP-AES described above. The transition metal element detected in the filtrate is a transition metal element constituting the olivine-type phosphate compound. The transition metal element detected may include at least one selected from the group consisting of manganese (Mn) and iron (Fe). That is, the filtrate contains a transition metal element, and the transition metal element contained in the filtrate constitutes the olivine-type phosphate compound and may include at least one selected from the group consisting of manganese and iron.

The filtrate preferably has a Gardner color scale of 6 or less and more preferably has a Gardner color scale of 5 or less. The Gardner color scale is one of standards for the strength of color of a sample specified in Japanese Industrial Standards (JIS) and can be measured by a method specified in "JIS K0071-2: 1998 Testing methods for colour of chemical products - Part 2: Gardner colour scale". Specifically, the transparent color of a sample is compared with the transparent colors of liquid Gardner color scale reference standards (numbered from 1 to 18) prepared using potassium hexachloro platinate (IV), iron chloride (III), cobalt chloride (II), and hydrochloric acid and is measured as a color number represented by a color scale of 1 to 18. The filtrate may have a Gardner color scale of, for example, 1 or more or 2 or more.

When the positive electrode active material is heated from a temperature of 25°C to a temperature of 300°C at 1°C/min and then left to stand at 300°C for 1 hour, the mass change ratio of the positive electrode active material is preferably 0.20% or less, more preferably 0.10% or less. The mass change ratio may be 0.01% or more or 0.02% or more.

The olivine-type phosphate compound may contain at least one selected from the group consisting of lithium manganese iron phosphate (LMFP), lithium manganese phosphate (LMP), and lithium iron phosphate (LFP). The olivine-type phosphate compound may have a composition represented by, for example, the following general formula.

$$Li_{1-a}Mn_{1-x}Fe_xPO_4$$

A relationship of, for example, "$-0.5 \leq a \leq 0.5$" may be satisfied. x may be, for example, 0 or more, 0.05 or more, 0.1 or more, 0.2 or more, 0.3 or more, 0.4 or more, 0.5 or more, 0.6 or more, 0.7 or more, 0.8 or more, or 0.9 or more. x may be, for example, 1 or less, less than 1, 0.9 or less, 0.8 or less, 0.7 or less, 0.6 or less, 0.5 or less, 0.4 or less, 0.3 or less, 0.2 or less, or 0.1 or less.

The LMFP, LMP, and LFP may be doped with an element (dopant) other than lithium (Li), Mn, Fe, phosphorus (P), and oxygen (O). The amount of the dopant added (amount fraction relative to amount-of-substance of Li) may be, for example, 0.01 to 0.1. The dopant may contain, for example, at least one selected from the group consisting of boron (B), nitrogen (N), halogen, silicon (Si), sodium (Na), Mg, aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), Sr, yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium(Tm), ytterbium (Yb), lutetium (Lu), and actinide.

The positive electrode active material may contain, as a main component, at least one selected from the group consisting of LMFP, LMP, and LFP and may further contain another component. The another component may contain, for example, a lithium-nickel composite oxide (LNO), a lithium-cobalt composite oxide (LCO), or a lithium-manganese composite oxide (LMO). When the positive electrode active material contains LMFP, the mixing ratio (mass ratio) between LMFP and another component may be, for example, "LMFP/another component = 9/1 to 1/9", "LMFP/another component = 8/2 to 2/8", "LMFP/another component = 7/3 to 3/7", or "LMFP/another component = 6/4 to 4/6". The positive electrode active material may be, for example, a mixture of a powder of LMFP and a powder of another component.

The LMP may have a composition represented by, for example, a general formula of "$Li_{1-a}MnPO_4$ ($-0.5 \leq a \leq 0.5$)". The LFP may have a composition represented by, for example, a general formula of "$Li_{1-a}FePO_4$ ($-0.5 \leq a \leq 0.5$)".

The LNO may have a crystal structure belonging to, for example, a space group R-3m. The LNO may have a composition represented by, for example, the following general formula.

$$Li_{1-a}Ni_xM_{1-x}O_2$$

In the formula, relationships of $-0.5 \leq a \leq 0.5$ and $0 \leq x \leq 1$ are satisfied. M may contain, for example, at least one selected from the group consisting of Co, Mn, and Al. A relationship of, for example, $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. A relationship of, for

example, $-0.4 \leq a \leq 0.4$, $-0.3 \leq a \leq 0.3$, $-0.2 \leq a \leq 0.2$, or $-0.1 \leq a \leq 0.1$ may be satisfied.

The LNO may contain, for example, at least one selected from the group consisting of $LiNi_{0.9}Co_{0.1}O_2$, $LiNi_{0.9}Mn_{0.1}O_2$, and $LiNiO_2$.

The LNO may be represented by, for example, the following general formula. A compound represented by the following general formula may also be referred to as "NCM".

$$Li_{1-a}Ni_xCo_yMn_zO_2$$

In the formula, relationships of $-0.5 \leq a \leq 0.5$, $0 < x < 1$, $0 < y < 1$, $0 < z < 1$, $x + y + z = 1$ are satisfied. A relationship of, for example, $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. A relationship of, for example, $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. A relationship of, for example, $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

The NCM may contain, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$.

The LNO may be represented by, for example, the following general formula. A compound represented by the following general formula may also be referred to as "NCA".

$$Li_{1-a}Ni_xCo_yAl_zO_2$$

In the formula, relationships of $-0.5 \leq a \leq 0.5$, $0 < x < 1$, $0 < y < 1$, $0 < z < 1$, and $x + y + z = 1$ are satisfied. A relationship of, for example, $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. A relationship of, for example, $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. A relationship of, for example, $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

The NCA may contain, for example, at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O2$, $LiNi_{0.8}Co_{0.15}Al_{0.05}O_2$, and $LiNi_{0.9}Co_{0.05}Al_{0.05}O_2$.

Method for Producing Positive Electrode Active Material

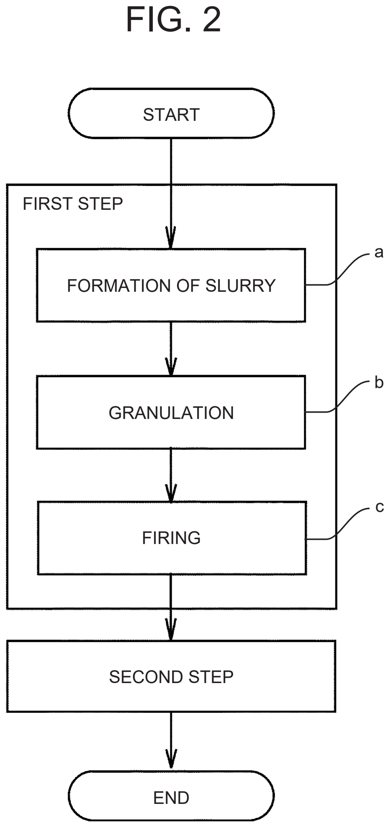

FIG. 2 is a schematic flowchart of a method for producing a positive electrode active material according to the present embodiment. Hereinbelow, the "method for producing a positive electrode active material according to the present embodiment" may be abbreviated as the "present method". The method for producing a positive electrode active material according to the present embodiment may include a first step and a second step. The first step may include, for example, "(a) Formation of Slurry", "(b) Granulation", and "(c) Firing".

First Step

(a) Formation of Slurry

The present method may include forming a slurry by, for example, mixing a lithium compound, a manganese compound, an iron compound, a phosphoric acid compound, a carbon source, and a solvent. The lithium compound, the manganese compound, the phosphoric acid compound, and the iron compound may be weighed in such a manner that a compositional ratio (ratio of amount of substance) shown in a composition formula of, for example, "$Li_{1-a}Mn_{1-x}Fe_xPO_4$ ($-0.5 \leq a \leq 0.5$, $0 \leq x \leq 1$)" is achieved. The lithium compound may contain, for example, lithium carbonate or lithium hydroxide. The manganese compound may contain, for example, manganese carbonate. The phosphoric acid compound may contain, for example, phosphoric acid or lithium dihydrogen phosphate. The iron compound may contain, for example, iron oxalate or ferric phosphate.

The carbon source is a raw material of carbon to be attached to the surface of a primary particle. The carbon source may contain, for example, sugar or an organic acid. The carbon source may contain, for example, glucose, sucrose, fructose, citric acid, or lactic acid. The carbon source may contain, for example, sugar. The amount of the carbon source to be added may be, for example, 1% to 20% in terms of mass fraction relative to a raw material mixture. The carbon source may be added after granules are formed using a raw material mixture of other raw materials. In this case, the amount of the carbon source to be added may be, for example, 1% to 20% in terms of mass fraction relative to the granules.

The solvent may contain, for example, water. The solid content concentration of the slurry may be, for example, 20% to 40% in terms of mass fraction.

The particle size of particles in the slurry may be adjusted by performing wet grinding. For example, wet grinding may be performed in such a manner that a D50 of 0.10 $\mu$m to 1 $\mu$m is achieved.

(b) Granulation

The present method may include granulating the slurry by, for example, drying the slurry to form secondary particles. For example, the slurry may be granulated by spray drying to form secondary particles. The secondary particles formed by granulation are also referred to as "granules". That is, the secondary particles may be referred to as granules.

(c) Firing

The present method may include subjecting the secondary particles to heat treatment to generate an olivine-type phosphate compound. Any heat treatment furnace (e.g., an electric furnace or a Maffle furnace) may be used. A heat-treatment atmosphere may be, for example, an inert atmosphere. The inert atmosphere may be, for example, a nitrogen atmosphere. A heat-treatment temperature may be, for example, 400°C to 700°C. A heat-treatment time may be, for example, 1 hour to 6 hours.

In this way, an olivine-type phosphate compound is obtained as a precursor particle. The precursor particle includes primary particles and a carbon layer. The primary particles contain the olivine-type phosphate compound. The carbon layer covers at least part of the surface of the primary particle. The carbon layer contains carbon.

Second Step

The second step is a step in which the precursor particles provided in the first step are subjected to vacuum drying treatment at a temperature of 150°C or higher. Vacuum drying is drying treatment performed by placing a container containing the precursor particles in a metallic or glass chamber that can be opened and closed and reducing the pressure of an atmosphere in the chamber with a vacuum pump or the like. At this time, the temperature in the chamber is preferably 150°C or higher and may be 160°C or higher, 170°C or higher, 180°C or higher, 190°C or higher, or 200°C or higher and 250°C or lower, 240°C or lower, 230°C or lower, or 220°C or lower. A heating time may be, for example, 1 minute or more, 3 minutes or more, or 5 minutes or more and 120 minutes or less, 90 minutes or less, or 60 minutes or less. The vacuum pump to be usually used may be a rotary oil pump, a mechanical booster pump, a dry scroll pump, a dry roots pump, a turbo-molecular pump, or the like. A positive electrode active material is obtained through the second step.

Through the second step, a positive electrode active material such that the concentration of a transition metal element detected by ICP-AES in the filtrate described above is 200 ppm or less in total can be obtained. Through the second step, a positive electrode active material such that the filtrate described above has a Gardner color scale of 6 or less can be obtained. The reason for this is considered to be that by performing the second step, it is possible to reduce the concentration of a transition metal element eluted when the positive electrode active material is immersed in pure water. That is, it is expected that a positive electrode active material that can prevent deterioration of the capacity retention ratio is produced through the second step.

In the second step, the precursor particles may be impregnated and mixed with toluene before the vacuum drying treatment is performed. By impregnating and mixing the positive electrode active material with toluene, the concentration of a transition metal element in the filtrate described above can further be reduced or the Gardner color scale of the filtrate described above can further be reduced.

Battery

In some present embodiments, the battery has a monopolar structure. In some present embodiments, the battery has a bipolar structure. As an example, a battery having a bipolar structure (bipolar battery) will be described.

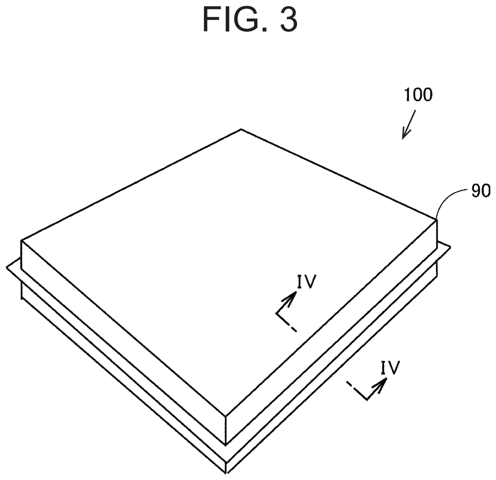

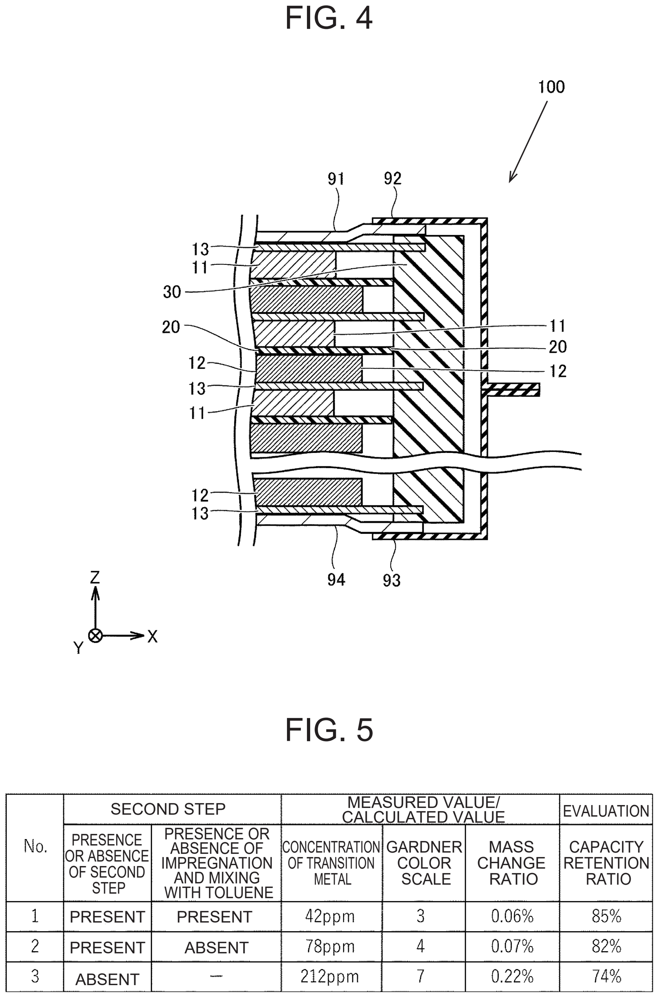

FIG. 3 is a schematic perspective view of a battery according to the present embodiment. FIG. 4 is a schematic sectional view taken along the line IV-IV shown in FIG. 3. Hereinafter, a "perpendicular direction" refers to a normal direction relative to the surface of a sheet-shaped member (e.g., a foil or an electrode). An "in-plane direction" refers to any direction orthogonal to the perpendicular direction. In FIG. 4, a Z-axis direction corresponds to the perpendicular direction. An X-axis direction and a Y-axis direction are examples of the in-plane direction.

A battery 100 includes an exterior body 90 and a power-generating element. The exterior body 90 houses the power-generating element. The exterior body 90 may include, for example, a first current collector plate 91, a first laminate film 92, a second laminate film 93, and a second current collector plate 94. The first laminate film 92 and the second laminate film 93 are joined together around their ends in the in-plane direction. At the joint between the first laminate film 92 and the second laminate film 93, a sealing material (not shown) may be interposed between the first laminate film 92 and the second laminate film 93.

The first current collector plate 91 and the second current collector plate 94 are joined to the power-generating element at their ends in a lamination direction (Z-axis direction). The first laminate film 92 is joined to the first current collector plate 91. The second laminate film 93 is joined to the second current collector plate 94. At the joint between the current collector plate and the laminate film, a sealing material (not shown) may be interposed between the current collector plate and the laminate film.

The power-generating element includes a plurality of bipolar electrodes. The bipolar electrodes are laminated in the perpendicular direction (Z-axis direction). Each of the bipolar electrodes includes a positive electrode layer 11, a current collector foil 13, and a negative electrode layer 12 in this order in the perpendicular direction. In the in-plane direction, (e.g., in the X-axis direction), the current collector foil 13 extends outward beyond the positive electrode layer 11 and the negative electrode layer 12. For example, the current collector foil 13 may extend outward beyond the positive electrode layer 11 and the negative electrode layer 12 around its entire periphery in the in-plane direction.

The current collector foil 13 is conductive. The current collector foil 13 may include, for example, a metallic foil or an electrically-conductive resin layer. For example, the current collector foil 13 may be formed by bonding together an Al foil and a Cu foil. A carbon material may be applied onto the surface of the current collector foil 13. The carbon material may contain, for example, carbon black.

The power-generating element includes a sealing material 30. The sealing material 30 is joined to the current collector foils 13 at its end in the in-plane direction. For example, the sealing material 30 may be thermally welded to the current collector foils 13. For example, the sealing material 30 may be disposed along the entire periphery in the in-plane direction. The sealing material 30 may contain, for example, a resin material. The sealing material 30 seals spaces between the current collector foils 13 adjacent to each other in the perpendicular direction. Cells are formed by sealing the spaces between the current collector foils 13 with the sealing material 30. The cells are minimum units of the power-generating element. The battery 100 includes the cells and therefore may also be referred to as a "bipolar module". Each of the cells is hermetically sealed. The cells are isolated from each other. Each of the cells includes the positive electrode layer 11, a separator 20, the negative electrode layer 12, and an electrolytic solution.

Positive Electrode Layer

The positive electrode layer 11 is attached to one side of the current collector foil 13. For example, the positive electrode layer 11 may have a groove. The positive electrode layer 11 may be formed, for example, in stripes. The positive electrode layer 11 contains a positive electrode active material. That is, the electrode includes a positive electrode active material. The details of the positive electrode active material are as described above.

The positive electrode layer 11 may further contain, for example, an electrically-conductive material and a binder in addition to the positive electrode active material. The amount of the electrically-conductive material to be added may be, for example, 0.1 to 10 parts by mass per 100 parts by mass of the positive electrode active material. The electrically-conductive material may contain any component. For example, the electrically-conductive material may contain at least one selected from the group consisting of graphite, acetylene black (AB), ketjen black (registered trademark), vapor-grown carbon fibers (VGCFs), carbon nanotubes (CNTs), and graphene flakes (GFs).

The amount of the binder to be added may be, for example, 0.1 to 10 parts by mass per 100 parts by mass of the positive electrode active material. The binder may contain any component. The binder may contain, for example, at least one selected from the group consisting of polyvinylidene fluoride (PVdF), a vinylidene fluoride-hexafluoropropylene copolymer (PVdF-HFP), polytetrafluoroethylene (PTFE), carboxymethyl cellulose (CMC), polyacrylic acid (PAA), polyvinyl alcohol (PVA), polyvinyl pyrrolidone (PVP), polyoxyethylene alkyl ether, and derivatives thereof.

The positive electrode layer 11 may further contain, for example, an inorganic filler, an organic filler, a solid electrolyte, a surface modifier, a dispersant, a lubricant, a flame retardant, a protective agent, a flux, a coupling agent, or an adsorbent. The positive electrode layer 11 may contain, for example, polyoxyethylene allyl phenyl ether phosphate, zeolite, a silane coupling agent, $MoS_2$, or $WO_3$.

Negative Electrode Layer

The negative electrode layer 12 is attached to one side of the current collector foil 13. The negative electrode layer 12 is disposed on the back of the positive electrode layer 11. The negative electrode layer 12 may have a larger area than the positive electrode layer 11. The negative electrode layer 12 contains a negative electrode active material.

The negative electrode active material may be, for example, in a particulate or sheet form. The D50 of the negative electrode active material may be, for example, 1 $\mu$m or more, 5 $\mu$m or more, or 10 $\mu$m or more. The D50 of the negative electrode active material may be, for example, 30 $\mu$m or less, 20 $\mu$m or less, 15 $\mu$m or less, or 10 $\mu$m or less.

The negative electrode active material may contain any component. The negative electrode active material may contain, for example, at least one selected from the group consisting of a carbon-based active material, an alloy-based active material, an Si-C-composite material, Li metal, an Li-based alloy, and lithium titanate. In some present embodiments, the battery may be an Li metal negative electrode battery.

The carbon-based active material may contain, for example, at least one selected from the group consisting of graphite, soft carbon, and hard carbon. "Graphite" is a general term for natural graphite and artificial graphite. The graphite may be a mixture of natural graphite and artificial graphite. The mixing ratio (mass ratio) may be, for example, "natural graphite/artificial graphite = 1/9 to 9/1", "natural graphite/artificial graphite = 2/8 to 8/2", or "natural graphite/artificial graphite = 3/7 to 7/3".

The surface of the graphite may be covered with, for example, amorphous carbon. The surface of the graphite may be covered with, for example, another type of material. The another type of material may contain, for example, at least one selected from the group consisting of P, W, Al, and O. The another type of material may contain, for example, at least one selected from the group consisting of $Al(OH)_3$, $AlOOH$, $Al_2O_3$, $WO_3$, $Li_2CO_3$, $LiHCO_3$, and $Li_3PO_4$.

The alloy-based active material may contain, for example, at least one selected from the group consisting of Si, Li silicate, SiO, an Si-based alloy, tin (Sn), SnO, and an Sn-based alloy.

The SiO may be represented by, for example, the following general formula.

$$SiO_x$$

In the formula, a relationship of $0 < x < 2$ is satisfied. A relationship of, for example, $0.5 \leq x \leq 1.5$, or $0.8 \leq x \leq 1.2$ may be satisfied.

The "Si-C composite material" refers to a composite material of a carbon-based active material (e.g., graphite) and an alloy-based active material (e.g., Si). For example, Si microparticles may be dispersed in carbon particles. For example, Si microparticles may be dispersed in graphite particles. For example, Li silicate particles may be coated with a carbon material (e.g., amorphous carbon).

Separator

The separator 20 can separate the positive electrode layer 11 from the negative electrode layer 12. The separator 20 is electrically insulative. The separator 20 may include, for example, at least one selected from the group consisting of a resin film (polymer film), an inorganic particle layer, and an organic particle layer. The separator 20 may include, for example, a resin film and an inorganic particle layer.

The resin film is porous. The resin film may include, for example, a microporous film or a non-woven fabric. The resin film has a resin skeleton. The resin skeleton may be, for example, continuous in a net-like way. Gaps in the resin skeleton form pores. The resin film allows an electrolytic solution to pass through it. The resin film may have an average pore diameter of, for example, 1 $\mu$m or less. The average pore diameter of the resin film may be, for example, 0.01 $\mu$m to 1 $\mu$m or 0.1 $\mu$m to 0.5 $\mu$m. The "average pore diameter" can be measured by mercury intrusion porosimetry. The resin film may have a Gurley value of, for example, 50 s/100 cm$^3$ to 250 s/100 cm$^3$. The Gurley value can be measured by a Gurley test method.

The resin film may contain, for example, at least one selected from the group consisting of an olefin-based resin, a polyurethane-based resin, a polyamide-based resin, a cellulose-based resin, a polyether-based resin, an acrylic resin, and a polyester-based resin. The resin film may contain, for example, at least one selected from the group consisting of polyethylene (PE), polypropylene (PP), polyamide (PA), polyamide imide (PAI), polyimide (PI), aromatic polyamide (aramid), polyphenylene ether (PPE), and derivatives thereof. The resin film can be formed by, for example, stretching or phase separation. The resin film may have a thickness of, for example, 5 $\mu$m to 50 $\mu$m or 10 $\mu$m to 25 $\mu$m.

The resin film may have, for example, a single-layer structure. The resin film may consist of, for example, a PE layer. The skeleton of the PE layer is formed of PE. The PE layer can have a shut-down function. The resin film may have, for example, a multilayer structure. The resin film may include, for example, a PP layer and a PE layer. The skeleton of the PP layer is formed of PP. The resin film may have, for example, a three-layer structure. The resin film may be formed by, for example, laminating a PP layer, a PE layer, and a PP layer in this order. The PE layer may have a thickness of, for example, 5 $\mu$m to 20 $\mu$m. The PP layer may have a thickness of, for example, 3 $\mu$m to 10 $\mu$m.

The inorganic particle layer may be formed on the surface of the resin film. The inorganic particle layer may be formed on only one side of the resin film or may be formed on both sides of the resin film. The inorganic particle layer may be formed on the side facing the positive electrode layer 11 or may be formed on the side facing the negative electrode layer 12. It should be noted that the inorganic particle layer may be formed on the surface of the positive electrode layer 11 or may be formed on the surface of the negative electrode layer 12.

The inorganic particle layer is porous. The inorganic particle layer contains inorganic particles. The inorganic particles may also be referred to as an "inorganic filler". Gaps between the inorganic particles form pores. The inorganic particle layer may have a thickness of, for example, 0.5 $\mu$m to 10 $\mu$m or 1 $\mu$m to 5 $\mu$m. The inorganic particles may contain, for example, a heat-resistant material. The inorganic particle layer containing a heat-resistance material is also referred to as "HRL (Heat Resistance Layer)". The inorganic particles may contain at least one selected from the group consisting of boehmite, alumina, zirconia, titania, magnesia, and silica. The inorganic particles may have any shape. For example, the inorganic particles may be spherical, rod-like, plate-like, or fibrous. The inorganic particles may have a D50 of, for example, 0.1 μm to 10 μm or 0.5 μm to 3 μm. The inorganic particle layer may further contain a binder. The binder may contain, for example, at least one selected from the group consisting of an acrylic resin, a polyamide-based resin, a fluorine-based resin, an aromatic polyether-based resin, and a liquid crystalline polyester-based resin.

The separator 20 may include, for example, an organic particle layer. The separator 20 may include, for example, an organic particle layer instead of the resin film. The separator 20 may include, for example, an organic particle layer instead of the inorganic particle layer. The separator 20 may include both a resin film and an organic particle layer. The separator 20 may include both an inorganic particle layer and an organic particle layer. The separator 20 may include a resin film, an inorganic particle layer, and an organic particle layer.

The organic particle layer may have a thickness of, for example, 0.1 μm to 50 μm, 0.5 μm to 20 μm, 0.5 μm to 10 μm, or 1 μm to 5 μm. The organic particle layer contains organic particles. The organic particles may also be referred to as an "organic filler". The organic particles may contain a heat-resistant material. The organic particles may contain, for example, at least one selected from the group consisting of PE, PP, PTFE, PI, PAI, PA, and aramid. The organic particles may be, for example, spherical, rod-like, plate-like, or fibrous. The organic particles may have a D50 of, for example, 0.1 μm to 10 μm or 0.5 μm to 3 μm.

The separator 20 may include, for example, a mixed layer. The mixed layer contains both inorganic particles and organic particles.

Electrolytic Solution

The electrolytic solution is a liquid electrolyte. The electrolytic solution contains a solute and a solvent. The concentration of the solute may be, for example, 0.5 mol/L to 1 mol/L, 1 mol/L to 1.5 mol/L, 1.5 mol/L to 2 mol/L, 2 mol/L to 2.5 mol/L, or 2.5 mol/L to 3 mol/L. "mol/L" may also be written as "M". The solute contains a supporting salt (Li salt). The solute may contain, for example, an inorganic acid salt, an imide salt, an oxalato complex, or a halide. The solute may contain, for example, at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives thereof.

The electrolytic solution may contain, for example, a carbonate-based solvent (carbonic ester-based solvent). The solvent may contain, for example, a cyclic carbonate, a chain carbonate, or a fluorinated carbonate. The solvent may contain, for example, at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives thereof.

The solvent may contain a cyclic carbonate (e.g., EC, PC, or FEC) and a chain carbonate (e.g., EMC, DMC, or DEC). The mixing ratio (volume ratio) between the cyclic carbonate and the chain carbonate may be, for example, "cyclic carbonate/chain carbonate = 1/9 to 4/6", "cyclic carbonate/chain carbonate = 2/8 to 3/7", or "cyclic carbonate/chain carbonate = 3/7 to 4/6".

The solvent may contain a cyclic carbonate (e.g., EC or PC) and a fluorinated cyclic carbonate (e.g., FEC). The mixing ratio (volume ratio) between the cyclic carbonate and the fluorinated cyclic carbonate may be, for example, "cyclic carbonate/fluorinated cyclic carbonate = 99/1 to 90/10", "cyclic carbonate/fluorinated cyclic carbonate = 9/1 to 1/9", "cyclic carbonate/fluorinated cyclic carbonate = 9/1 to 7/3" or "cyclic carbonate/fluorinated cyclic carbonate = 3/7 to 1/9".

The solvent may contain, for example, EC, FEC, EMC, DMC, and DEC. The volume ratios of the respective components may satisfy a relationship represented by, for example, the following formula.

$$V_{EC} + V_{FEC} + V_{EMC} + V_{DMC} + V_{DEC} = 10$$

In the above expression, $V_{EC}$, $V_{FEC}$, $V_{EMC}$, $V_{DMC}$, and $V_{DEC}$ respectively represent the volume ratios of EC, FEC, EMC, DMC, and DEC.

The following relationships are satisfied: $1 \leq V_{EC} \leq 4$, $0 \leq V_{FEC} \leq 3$, $V_{EC} + V_{FEC} \leq 4$, $0 \leq V_{EMC} \leq 9$, $0 \leq V_{DMC} \leq 9$, $0 \leq V_{DEC} \leq 9$, and $6 \leq V_{EMC} + V_{DMC} + V_{DEC} \leq 9$.

For example, a relationship of $1 \leq V_{EC} \leq 2$ or $2 \leq V_{EC} \leq 3$ may be satisfied.

For example, a relationship of $1 \leq V_{FEC} \leq 2$ or $2 \leq V_{FEC} \leq 4$ may be satisfied.

For example, a relationship of $3 \leq V_{EMC} \leq 4$ or $6 \leq V_{EMC} \leq 8$ may be satisfied.

For example, a relationship of $3 \leq V_{DMC} \leq 4$ or $6 \leq V_{DMC} \leq 8$ may be satisfied.

For example, a relationship of $3 \leq V_{DEC} \leq 4$ or $6 \leq V_{DEC} \leq 8$ may be satisfied.

The solvent may have a composition of, for example, "EC/EMC = 3/7", "EC/DMC = 3/7", "EC/FEC/DEC = 1/2/7", "EC/DMC/EMC = 3/4/3", "EC/DMC/EMC = 3/3/4", "EC/FEC/DMC/EMC = 2/1/4/3", "EC/FEC/DMC/EMC = 1/2/4/3", "EC/FEC/DMC/EMC = 2/1/3/4", or "EC/FEC/DMC/EMC = 1/2/3/4" in terms of volume ratio.

The electrolytic solution may contain an ether-based solvent. The electrolytic solution may contain, for example, at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives thereof.

The electrolytic solution may contain any additive. The amount of the additive to be added (the mass fraction of the additive relative to the total mass of the electrolytic solution) may be, for example, 0.01% to 5%, 0.05% to 3%, or 0.1% to 1%. The additive may contain, for example, an SEI (Solid Electrolyte Interphase) formation promoter, an SEI formation inhibitor, a gas-forming agent, an overcharging inhibitor, a flame retardant, an antioxidant, an electrode protective agent, or a surfactant.

The additive may contain, for example, at least one selected from the group consisting of vinylene carbonate (VC), vinyl ethylene carbonate (VEC), 1,3-propanesultone (PS), tert-amylbenzene, 1,4-di-tert-butylbenzene, biphenyl (BP), cyclohexylbenzene (CHB), ethylene sulfite (ES), propanesultone (PS), ethylene sulfate (DTD), γ-butyrolactone, a phosphazene compound, a carboxylic ester [e.g., methyl formate (MF), methyl acetate (MA), methyl propionate (MP), or diethyl malonate (DEM)], fluorobenzene [e.g., monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, or hexafluorobenzene], fluorotoluene (e.g., 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, or octafluorotoluene), benzotrifluoride (e.g., benzotrifluoride, 2-fluorobenzotrifluoride, 3-fluorobenzotrifluoride, 4-fluorobenzotrifluoride, 2-methylbenzotrifluoride, 3-methylbenzotrifluoride, or 4-methylbenzotrifluoride), fluoroxylene (e.g., 3-fluoro-o-xylene, 4-fluoro-o-xylene, 2-fluoro-m-xylene, or 5-fluoro-m-xylene), a sulfur-containing heterocyclic compound (e.g., benzothiazole, 2-methylbenzothiazole, or tetrathiafulvalene), a nitrile compound (e.g., adiponitrile or succinonitrile), a phosphoric ester (e.g., trimethyl phosphate or triethyl phosphate), a carboxylic anhydride (e.g., acetic anhydride, propionic anhydride, oxalic anhydride, succinic anhydride, maleic anhydride, phthalic anhydride, or benzoic anhydride), an alcohol (e.g., methanol, ethanol, n-propyl alcohol, ethylene glycol, or diethylene glycol monomethyl ether), and derivatives thereof.

The component described above as a solute or a solvent may be used as a trace component (additive). The additive may contain, for example, at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives thereof.

The electrolytic solution may contain an ionic liquid. The ionic liquid may contain, for example, at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives thereof.

In some present embodiments, the battery may include a gel electrolyte. That is, the battery may be a polymer battery. The gel electrolyte may contain an electrolytic solution and a polymer material. The polymer material may form a polymer matrix. The polymer material may contain, for example, at least one selected from the group consisting of PVdF, PVdF-HFP, polyacrylonitrile (PAN), PVdF-PAN, polyethylene oxide (PEO), polyethylene glycol (PEG), and derivatives thereof.

Production of Positive Electrode Active Material

No. 1

First Step

The first step is a precursor particle production step. Lithium carbonate, manganese carbonate, iron oxalate, and phosphoric acid were weighed in such a manner that a compositional ratio shown in a composition formula of "$Li_1Mn_{0.8}Fe_{0.2}PO_4$" was achieved. These raw materials were dispersed in water to prepare a slurry, and the slurry was then subjected to grinding in a bead mill using beads having a diameter of 0.3 mm at a circumferential speed of 10 m/sec for 30 minutes and then fired to obtain granules. Fructose was added to and mixed with the granules at a mass fraction of 10%. After dried, this mixture was heated to a firing temperature of 600°C at a temperature increase rate of 5°C/min in an inert atmosphere, maintained at 600°C for 1 hour, and then cooled to room temperature to obtain precursor particles.

Second Step

The second step is a vacuum drying treatment step. The precursor particles obtained in the first step were impregnated and mixed with toluene and then subjected to vacuum drying treatment at a temperature of 200°C.

No. 2

A positive electrode active material was obtained under the same conditions as No. 1 except that in the vacuum drying treatment step (second step), vacuum drying treatment was performed without performing impregnation and mixing with toluene.

No. 3

Precursor particles obtained under the same conditions as in the precursor particle production step (first step) of No. 1 without performing the vacuum drying treatment (second step) of No. 1 were used as a positive electrode active material.

Measurement

ICP-AES Measurement

A filtrate was obtained by a preparation method including immersing 0.5 g of each of the positive electrode active materials of No. 1 to No. 3 in 10 g of pure water and subjecting a resulting immersed liquid to ultrasonic treatment for 10 minutes, stirring for 6 hours, followed by filtration using a membrane filter having a pore diameter of 0.2 $\mu$m. The preparation method was performed at room temperature (25°C). The concentration of a transition metal element in the filtrate was measured by ICP-AES. The sum of concentrations of Fe and Mg was regarded as the concentration of a transition metal element. The measurement results are shown in FIG. 5.

Gardner Color Scale Measurement

The filtrate obtained above was placed in a quartz cell and evaluated using a chromometer based on the Gardner color scale for oils. The evaluation results are shown in FIG. 5.

Mass Change Ratio

First, 0.5 g (mass before drying) of each of the positive electrode active materials of No. 1 to No. 3 was heated to 300°C from room temperature (25°C) at a temperature increase rate of 1°C/min in an inert atmosphere and then left to stand at 300°C for 1 hour, and the mass (mass after drying) of the positive electrode active material was then measured to calculate a mass change ratio by the following formula. The calculation results are shown in FIG. 5.

Mass change ratio (%) = {(Mass before drying - Mass after drying)/Mass before drying} $\times$ 100

Evaluation

Battery Characteristics

A lithium ion secondary battery (coin cell) was produced. The configuration of the cell is as follows.
A positive electrode active material, an electrically-conductive material (acetylene black), and a binder (PVdF) were mixed to form a mixture. The mixing ratio (mass ratio) among them was "positive electrode active material/electrically-conductive material/binder = 92/5/3". The mixture was dispersed in a solvent (N-methyl-2-pyrrolidone) to form a paste. The solid content concentration of the paste was 50% in terms of mass fraction. The paste was applied onto the surface of an Al foil and dried to form a positive electrode layer. The density of the positive electrode layer was adjusted to 1.8 g/cm$^3$ by roll press to form a positive electrode original plate. The positive electrode original plate was subjected to vacuum drying treatment at 120°C for 12 hours. After drying, a disc sample (diameter: 14 mm) was punched out from the positive electrode original plate.
A coin cell was assembled in a glove box. The configuration of the cell is as follows.

Working electrode: Disk sample (Positive electrode)

Counter electrode: Li foil
Separator: Polymer porous membrane
Electrolytic solution: "EC/DMC = 3/7 (Volume ratio)", $LiPF_6$ (1 mol/L)

Based on a discharge capacity estimated from the coating weight, 1C of the obtained coin cell was determined. "C" is a symbol indicating the rate (hour rate) of an electric current. At a rate of 1C, a theoretical capacity is discharged in 1 hour. In an environment at 25°C, the coin cell was charged by CCCV charging at a charge rate of 0.1C and an upper limit voltage of 4.3 V, and the charging was terminated when a charge current was reduced to 0.01C. Then, a 0.1C discharge capacity (defined as a "first-time discharge capacity") at the time when a discharge cut-off potential was set to 3 V was determined. Then, a 0.1C rate was again set based on the obtained discharge capacity, and a discharge capacity after 50 cycles (defined as a "discharge capacity after 50 cycles") was determined to calculate (discharge capacity after 50 cycles/first-time discharge capacity) $\times$ 100% as a capacity retention ratio. The capacity retention ratio is shown in FIG. 5. It is considered that durability is higher when the capacity retention ratio is higher.

Result

As shown in FIG. 5, the capacity retention ratio tends to be high when the requirements of the present disclosure are satisfied.

**Claims**

1. A positive electrode active material comprising:

   a primary particle (1); and
   a coating (5), wherein:

   the primary particle (1) includes an olivine-type phosphate compound;
   the coating (5) covers at least part of a surface of the primary particle (1);
   the coating (5) includes carbon; and
   when a filtrate is obtained by a preparation method including immersing 0.5 g of the positive electrode active material in 10 g of pure water and subjecting a resulting immersed liquid to ultrasonic treatment for 10 minutes and stirring for 6 hours followed by filtration, a concentration of a transition metal element in the filtrate detected by ICP-AES is 200 ppm or less in total.

2. The positive electrode active material according to claim 1, wherein a Gardner color scale of the filtrate is 6 or less.

3. The positive electrode active material according to claim 1, wherein when the positive electrode active material is heated from a temperature of 25°C to a temperature of 300°C at 1°C/min and then left to stand at 300°C for 1 hour, a mass change ratio of the positive electrode active material is 0.20% or less.

4. The positive electrode active material according to claim 1, further comprising:

   a plurality of the primary particles (1); and
   a secondary particle (2), wherein the secondary particle (2) is an assembly of the plurality of the primary particles (1).

5. The positive electrode active material according to claim 1, wherein the olivine-type phosphate compound includes at least one selected from the group consisting of lithium manganese iron phosphate, lithium manganese phosphate, and lithium iron phosphate.

6. The positive electrode active material according to claim 1, wherein:

   the olivine-type phosphate compound is lithium manganese iron phosphate; and
   the transition metal element includes at least one selected from the group consisting of manganese and iron.

7. The positive electrode active material according to claim 1, wherein:

the filtrate includes the transition metal element; and
the transition metal element includes the olivine-type phosphate compound and at least one selected from the group consisting of manganese and iron.

8. The positive electrode active material according to claim 2, wherein the Gardner color scale of the filtrate is 1 or more.

9. The positive electrode active material according to claim 8, wherein the Gardner color scale of the filtrate is 5 or less.

10. A battery (100) comprising the positive electrode active material according to any one of claims 1 to 9.

11. The battery (100) according to claim 10, wherein the battery (100) includes a bipolar structure.

12. A method for producing a positive electrode active material, the method comprising:

providing precursor particles; and
subjecting the precursor particles to vacuum drying treatment at a temperature of 150°C or higher to produce the positive electrode active material, wherein the positive electrode active material is the positive electrode active material according to any one of claims 1 to 9.

13. The method according to claim 12, wherein the vacuum drying treatment is performed at a temperature of 180°C or higher and 250°C or lower.

14. The method according to claim 12, further comprising, before performing the vacuum drying treatment, impregnating and mixing the precursor particles with toluene.

# FIG. 1

# FIG. 2

```
                    ┌──────────────────┐
                    │      START       │
                    └──────────────────┘
                             │
                             ▼
  ┌─────────────────────────────────────────────┐
  │ FIRST STEP                                    │
  │                                               │
  │      ┌──────────────────────────┐             │
  │      │   FORMATION OF SLURRY     │───────── a │
  │      └──────────────────────────┘             │
  │                  │                            │
  │                  ▼                            │
  │      ┌──────────────────────────┐             │
  │      │       GRANULATION         │───────── b │
  │      └──────────────────────────┘             │
  │                  │                            │
  │                  ▼                            │
  │      ┌──────────────────────────┐             │
  │      │         FIRING            │───────── c │
  │      └──────────────────────────┘             │
  │                  │                            │
  └──────────────────┼────────────────────────────┘
                     ▼
      ┌──────────────────────────────┐
      │        SECOND STEP           │
      └──────────────────────────────┘
                     │
                     ▼
           ┌──────────────────┐
           │       END        │
           └──────────────────┘
```

# FIG. 3

# FIG. 4

# FIG. 5

| No. | SECOND STEP | | MEASURED VALUE/ CALCULATED VALUE | | | EVALUATION |
|---|---|---|---|---|---|---|
| | PRESENCE OR ABSENCE OF SECOND STEP | PRESENCE OR ABSENCE OF IMPREGNATION AND MIXING WITH TOLUENE | CONCENTRATION OF TRANSITION METAL | GARDNER COLOR SCALE | MASS CHANGE RATIO | CAPACITY RETENTION RATIO |
| 1 | PRESENT | PRESENT | 42ppm | 3 | 0.06% | 85% |
| 2 | PRESENT | ABSENT | 78ppm | 4 | 0.07% | 82% |
| 3 | ABSENT | — | 212ppm | 7 | 0.22% | 74% |

# EP 4 760 817 A1

**EUROPEAN SEARCH REPORT**

Europäisches Patentamt
European Patent Office
Office européen des brevets

**EP 25 21 1569**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2021 009838 A (TORAY INDUSTRIES) 28 January 2021 (2021-01-28) * the whole document * | 1-14 | INV. H01M4/58 H01M4/136 C01B25/00 H01M4/1397 H01M4/36 H01M4/62 |
| X | EP 3 001 486 A1 (SUMITOMO OSAKA CEMENT CO LTD [JP]) 30 March 2016 (2016-03-30) | 1-13 | |
| A | * paragraph [0005] - paragraph [0006] * * figures 1-3 * * paragraph [0023] - paragraph [0025] * | 14 | |
| A | WO 2024/244309 A1 (SHENZHEN DYNANONIC CO LTD [CN]; QUJING DYNANONIC CO LTD [CN] ET AL.) 5 December 2024 (2024-12-05) * the whole document * | 1-14 | |
| A | US 2023/411604 A1 (DENG XIAOHAN [CN] ET AL) 21 December 2023 (2023-12-21) * the whole document * | 1-14 | |
| A | WO 2021/037900 A1 (EVONIK OPERATIONS GMBH [DE]) 4 March 2021 (2021-03-04) * the whole document * | 1-14 | TECHNICAL FIELDS SEARCHED (IPC) H01M C01B |

The present search report has been drawn up for all claims

| Place of search | Date of completion of the search | Examiner |
|---|---|---|
| Munich | 9 April 2026 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

20

## ANNEX TO THE EUROPEAN SEARCH REPORT
## ON EUROPEAN PATENT APPLICATION NO.

EP 25 21 1569

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | | | Publication date | Patent family member(s) | | Publication date |
|---|---|---|---|---|---|---|
| JP 2021009838 | A | | 28-01-2021 | JP 7532906 | B2 | 14-08-2024 |
| | | | | JP 2021009838 | A | 28-01-2021 |
| EP 3001486 | A1 | | 30-03-2016 | CN 105470504 | A | 06-04-2016 |
| | | | | EP 3001486 | A1 | 30-03-2016 |
| | | | | JP 5929990 | B2 | 08-06-2016 |
| | | | | JP 2016071980 | A | 09-05-2016 |
| | | | | US 2016093888 | A1 | 31-03-2016 |
| WO 2024244309 | A1 | | 05-12-2024 | CN 116692812 | A | 05-09-2023 |
| | | | | EP 4722151 | A1 | 08-04-2026 |
| | | | | US 20260028240 | A1 | 29-01-2026 |
| | | | | WO 2024244309 | A1 | 05-12-2024 |
| US 2023411604 | A1 | | 21-12-2023 | CN 116314762 | A | 23-06-2023 |
| | | | | EP 4478453 | A1 | 18-12-2024 |
| | | | | US 2023411604 | A1 | 21-12-2023 |
| | | | | WO 2024164404 | A1 | 15-08-2024 |
| WO 2021037900 | A1 | | 04-03-2021 | BR 112022003651 | A2 | 24-05-2022 |
| | | | | CN 114342114 | A | 12-04-2022 |
| | | | | EP 4022697 | A1 | 06-07-2022 |
| | | | | ES 3032698 | T3 | 23-07-2025 |
| | | | | HU E071978 | T2 | 28-10-2025 |
| | | | | IL 290799 | A | 01-04-2022 |
| | | | | JP 7623359 | B2 | 28-01-2025 |
| | | | | JP 2022545945 | A | 01-11-2022 |
| | | | | KR 20220054823 | A | 03-05-2022 |
| | | | | PL 4022697 | T3 | 15-09-2025 |
| | | | | TW 202115952 | A | 16-04-2021 |
| | | | | UA 129809 | C2 | 06-08-2025 |
| | | | | US 2022289589 | A1 | 15-09-2022 |
| | | | | WO 2021037900 | A1 | 04-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021009838 A